# EUROPÄISCHE PATENTSCHRIFT

(11) **EP 4 008 843 B1**
(45) Veröffentlichungstag und Bekanntmachung des Hinweises auf die Patenterteilung: **05.11.2025**
(21) Anmeldenummer: 21210513.4
(22) Anmeldetag: 25.11.2021
(51) Int. Cl.: E02F 9/26, E02F 9/22, B66C 13/18, G05B 13/02

(54) **ARBEITSGERÄT UND VERFAHREN ZUR ANSTEUERUNG EINES ANTRIEBS EINES SOLCHEN**
WORKING DEVICE AND METHOD OF CONTROLLING A DRIVE OF SUCH A DEVICE
APPAREIL DE TRAVAIL ET PROCÉDÉ DE COMMANDE D'UN ENTRAÎNEMENT D'UN TEL APPAREIL DE TRAVAIL

(30) Priorität: 26.11.2020 DE 102020131331
(43) Veröffentlichungstag der Anmeldung: 08.06.2022
(73) Patentinhaber: Liebherr-MCCtec Rostock GmbH, 18147 Rostock (DE)
(72) Erfinder: VILBRANDT, Reinhard, 18198 Kritzmow (DE); SEIFERT, Martin, 18055 Rostock (DE)
(74) Vertreter: Laufhütte, Dieter

(56) Entgegenhaltungen:
- DE-A1- 102005 037 033
- DE-A1- 102016 118 297
- DE-T5- 112016 005 381
- US-A1- 2007 068 762

## Beschreibung

Die vorliegende Erfindung betrifft ein Arbeitsgerät, insbesondere einen Kran oder Bagger, mit einem Antrieb, einer Steuereinheit, einer Messeinrichtung und einem Speicher, wobei die Steuereinheit eingerichtet ist, anhand einer im Speicher gespeicherten Kennlinie eine Steuergröße zu bestimmen und bei Erkennung einer Abweichung zwischen einer erfassten Ist-Größe und einer Soll-Größe betreffend eine Bewegung einer durch den Antrieb angetriebenen Komponente die Kennlinie anzupassen oder eine neue Kennlinie zu generieren. Die vorliegende Erfindung betrifft ferner ein Verfahren zur Ansteuerung eines Antriebs eines solchen Arbeitsgeräts.

Bei vielen Arbeitsgeräten wie z.B. Mobilkranen oder Hydraulikbaggern erfolgt die Ansteuerung der hydraulischen Hubwerke oder anderer hydraulischer Werke mit Hilfe von gespeicherten Kennlinien oder Kennfeldern. Anhand derartiger Kennlinien oder Kennfelder kann beispielsweise eine Soll-Geschwindigkeit für ein Hubwerk in einen Stromwert für die Ansteuerung des Antriebs oder der hydraulischen Vorsteuerung des Antriebs des Hubwerks umgerechnet werden, wobei z.B. nicht-lineare Verläufe der hydraulischen Systems berücksichtigt werden. Sind mehrere Kennlinien für unterschiedliche Werte weiterer Parameter wie z.B. Temperatur oder Traglast vorgesehen, spricht man von Kennfeldern oder Kennlinienfeldern.

Die Kennlinien oder -felder sind dabei im Arbeitsgerät hinterlegt und werden üblicherweise manuell im Werk, beispielsweise nach einem Komponentenwechsel, eingestellt oder angepasst. Zwischen den manuellen Anpassungen erfolgende Veränderungen von Betriebspunkte der angesteuerten Komponenten, beispielsweise durch Alterung (z.B. erhöhte Leckage von Hydrauliköl) oder einen vor Ort erfolgenden Komponententausch, werden aktuell nicht systematisch berücksichtigt. Die manuellen Einstellungen der Kennlinien werden häufig subjektiv je nach Monteur unterschiedlich durchgeführt und sind in der Regel sehr zeitaufwändig.

Ein gattungsgemäßes Arbeitsgerät ist bereits aus der DE 11 2016 005 381 T5 bekannt.

Aufgabe der vorliegenden Erfindung ist es daher, die Ansteuerung bei derartigen Arbeitsgeräten zu verbessern. Hierbei sollen insbesondere Veränderungen der Betriebspunkte angesteuerter Komponenten einfach, zeitnah und systematisch berücksichtigt werden.

Erfindungsgemäß wird diese Aufgabe durch ein Arbeitsgerät mit den Merkmalen des Anspruchs 1 gelöst. Demnach wird ein Arbeitsgerät, insbesondere Hebezeug bzw. Kran oder Bagger, vorgeschlagen, welches einen Antrieb, eine Steuereinheit, eine mit der Steuereinheit verbundene Messeinrichtung und einen mit der Steuereinheit verbundenen Speicher umfasst. Mittels des Antriebs ist eine Komponente des Arbeitsgeräts bewegbar, wobei der Antrieb über die Steuereinheit mittelbar oder unmittelbar ansteuerbar ist. Durch die Messeinrichtung ist eine Ist-Größe betreffend eine Bewegung der angetriebenen Komponente erfassbar. In dem Speicher ist mindestens eine Kennlinie für die Ansteuerung des Antriebs gespeichert.

Erfindungsgemäß ist die Steuereinheit eingerichtet, in Abhängigkeit einer die Bewegung der Komponente betreffenden bzw. charakterisierenden Soll-Größe anhand einer gespeicherten Kennlinie eine Steuergröße für die Ansteuerung des Antriebs zu bestimmen. Ferner ist die Steuereinheit ausgelegt, die Werte der erfassten Ist-Größe und der Soll-Größe miteinander zu vergleichen und eine Abweichung zwischen diesen Werten zu erkennen. Auf Grundlage der erkannten Abweichung kann die Steuereinheit erfindungsgemäß selbstständig die bereits gespeicherte Kennlinie anpassen oder aber eine neue Kennlinie erzeugen und diese im Speicher ablegen, insbesondere parallel zur bereits gespeicherten Kennlinie.

Durch den Abgleich der gemessenen Ist-Größe mit der vorgegebenen Soll-Größe und die dynamische Anpassung einer gespeicherten oder Generierung einer neuen angepassten Kennlinie durch die Steuereinheit können zeitnah Abweichungen der Kennwerte des angesteuerten Systems erkannt und ausgewertet werden. Dadurch können Veränderungen der Kennwerte, beispielsweise aufgrund von Alterserscheinungen, nach einem Komponententausch oder aufgrund von Bauteiltoleranzen, kompensiert und dadurch die Ansteuerung verbessert werden. Eine manuelle Kalibrierung der Kennlinien ist nicht mehr notwendig oder kann lediglich ergänzend erfolgen. Die Anpassung / Neuerzeugung der Kennlinien kann auf Befehl durch einen Bediener oder selbstständig bzw. automatisch durchführbar sein.

Durch das vorgeschlagene adaptive System zur Anpassung der Kennlinien bzw. - felder wird die Qualität der Ansteuerung der Antriebe bzw. Werke des Arbeitsgeräts deutlich erhöht und systematische Veränderungen und Störungen kompensiert.

Bei der Erfassung der Ist-Größe handelt es sich genau genommen um eine Erfassung des Werts der Ist-Größe. Dasselbe gilt für die Steuergröße, deren Wert anhand der Kennlinie bestimmt wird. Der Einfachheit halber ist vorliegend allerdings schlicht von der Ist-Größe, der Soll-Größe und der Steuergröße die Rede und nicht von deren Werten.

Vorteilhafte Ausführungsformen der Erfindung ergeben sich aus den Unteransprüchen und der nachfolgenden Beschreibung.

Bei der Kennlinie kann es sich um eine im wörtlichen Sinne einzelne Kennlinie, einen Teil eines mehrere einzelne Kennlinien umfassenden Kennfelds bzw. Kennlinienfelds oder um ein mehrdimensionales Kennfeld bzw. Kennlinienfeld handeln.

Bei dem Antrieb kann es sich um einen Hydraulikmotor oder einen Hydraulikzylinder handeln. Der Antrieb kann vorgesteuert sein, beispielsweise über ein Stellglied bzw. Ventil, oder aber direkt angesteuert sein. Die Ansteuerung erfolgt vorzugsweise elektrisch, d.h. bei der Steuergröße handelt es sich insbesondere um eine elektrische Größe wie z.B. einen Stromwert. Bei der Steuergröße kann es sich ferner um eine Regelgröße handeln, d.h. bei der hier so bezeichneten Ansteuerung des Antriebs kann es sich um eine Regelung handeln.

Die Steuereinheit kann den Vergleich zwischen Ist- und Soll-Größe sowie die Analyse und Erkennung der Abweichung direkt lokal im Arbeitsgerät vornehmen. Alternativ ist denkbar, dass die Ist- und Soll-Größen durch die Steuereinheit an eine externe Rechnereinheit oder Cloud übermittelt werden, insbesondere drahtlos, und der Vergleich sowie die Analyse bzw. Erkennung der Abweichungen extern durch die Rechnereinheit bzw. Cloud durchgeführt wird. In diesem Fall kann vorgesehen sein, dass die lokal auf dem Speicher des Arbeitsgeräts abgelegte Kennlinie nach einer Übermittlung entsprechender Daten bzw. Signale der Rechnereinheit angepasst wird. Ferner ist vorstellbar, dass bei Erkennung einer Abweichung eine neue Kennlinie erzeugt und ggf. weiterhin angepasst wird, welche zunächst außerhalb des Arbeitsgeräts gespeichert ist, sodass die Bestimmung der Steuergröße weiter anhand der lokal gespeicherten Kennlinie erfolgt. Zu einem bestimmten Zeitpunkt kann die neu erzeugte Kennlinie dann an das Arbeitsgerät bzw. die Steuereinheit übermittelt und in den Speicher geladen werden.

Die Erkennung und/oder Analyse einer Abweichung zwischen Ist-Größe und Soll-Größe und/oder die Auswahl geeigneter Messdaten für diesen Vergleich kann unter Verwendung einer Fuzzy-Logik und/oder eines selbstlernenden bzw. "machine learning"-Algorithmus erfolgen.

In einer möglichen Ausführungsform ist vorgesehen, dass die Steuereinheit eingerichtet ist, die Erfassung der Ist-Größe und den Vergleich mit der Soll-Größe mehrfach, insbesondere in regelmäßigen Zeitintervallen, während der Betriebsdauer des Arbeitsgeräts durchzuführen. Die Ist-Größe kann hierbei mehrfach innerhalb einzelner Betriebsphasen, d.h. zwischen den jeweiligen Stillstandzeiten, des Arbeitsgeräts erfasst werden. Alternativ kann vorgesehen sein, dass die Ist-Größe zu festgelegten Zeitpunkten oder bei bestimmten Ereignissen erfasst wird, beispielsweise beim Starten des Arbeitsgeräts. Durch eine durchgängige Erfassung der Ist-Größe und einen entsprechend durchgängigen Abgleich mit der Soll-Größe können Abweichungen zuverlässig und zeitnah erkannt und ggf. kompensiert werden.

In einer weiteren möglichen Ausführungsform ist vorgesehen, dass im Speicher mehrere Kennlinien abgelegt sind. Diese können zu Kennfeldern gruppiert sein, wobei vorgesehen sein kann, dass durch die Steuereinheit immer ganze Kennfelder angepasst oder neu erstellt werden. Die Kennfelder können wiederum ebenfalls anhand bestimmter Größen oder Parameter wie z.B. Temperatur, Last oder einem Betriebszustand des Arbeitsgeräts gruppiert bzw. geclustert sein. Die Steuereinheit ist dabei eingerichtet, die Steuergröße in Abhängigkeit der Soll-Größe und mindestens einer weiteren Größe anhand einer gespeicherten Kennlinie zu bestimmen. Die weitere Größe ist vorzugsweise ebenfalls mittels einer weiteren Messeinrichtung erfassbar und kann einen Betriebsparameter des Arbeitsgeräts, eine Temperatur und/oder eine Last, z.B. eine Traglast eines Hubwerks, betreffen.

In einer weiteren möglichen Ausführungsform ist vorgesehen, dass die Steuereinheit eingerichtet ist, auf Grundlage der erkannten Abweichung zwischen Ist-Größe und Soll-Größe sowie unter Berücksichtigung der besagten weiteren Größe mehrere gespeicherte Kennlinien anzupassen oder mehrere neue Kennlinien zu erzeugen und im Speicher abzulegen. Dies kann z.B. gemeinsam als Kennfeld oder sequenziell, also Kennlinie für Kennlinie, erfolgen.

In einer weiteren möglichen Ausführungsform ist vorgesehen, dass die Steuereinheit eingerichtet ist, eine erkannte Abweichung zwischen Ist-Größe und Soll-Größe zu analysieren und automatisch eine Anpassung einer gespeicherten Kennlinie oder eine Erzeugung und Speicherung einer neuen Kennlinie durchzuführen. Die adaptive Anpassung der Kennlinie(n) erfolgt also selbstständig bzw. automatisch durch die Steuereinheit, ohne dass ein manueller Eingriff notwendig ist. Allerdings kann zusätzlich vorgesehen sein, dass eine Messung, ein Vergleich zwischen Ist- und Soll-Größe und/oder die Anpassung / Neuerzeugung der Kennlinie(n) auf Befehl eines Bedieners durchführbar ist. Letzteres kann beispielsweise direkt nach einem Komponententausch oder -reparatur durchgeführt werden, um direkt eine Anpassung der Kennlinien(n) zu initiieren.

In einer weiteren möglichen Ausführungsform ist vorgesehen, dass mittels der Messeinrichtung mehrere Messwerte der Ist-Größe zu unterschiedlichen Zeitpunkten während der Betriebsdauer des Arbeitsgeräts erfassbar sind, wobei die Steuereinheit eingerichtet ist, aus den erfassten Messwerten der Ist-Größe einen oder mehrere dieser Messwerte für den nachgelagerten Vergleich mit der Soll-Größe zu selektieren. Hierfür können geeignete Filter und/oder Algorithmen vorgesehen sein. Dadurch wird sichergestellt, dass für die adaptive Anpassung der Kennlinie(n) nur die aussagekräftigen und mathematisch verwendbaren Messwerte oder Zyklen der Ist-Größe herangezogen werden.

In einer weiteren möglichen Ausführungsform ist vorgesehen, dass die Steuereinheit eingerichtet ist, auf Grundlage einer erkannten Abweichung zwischen Ist-Größe und Soll-Größe eine neue Kennlinie zu erzeugen und im Speicher abzulegen, wobei die Steuergröße weiterhin anhand einer alten Kennlinie bestimmt wird. Die mindestens eine "aktive" Kennlinie, die zur Bestimmung der Steuergröße herangezogen wird, wird also nicht direkt angepasst, sondern es wird parallel dazu zunächst (mindestens) eine "inaktive" Kennlinie generiert und ggf. fortwährend angepasst, ohne dass dies die alte, aktive Kennlinie bzw. die aktuelle Ansteuerung beeinflusst.

Der Verzicht auf eine direkte Rückkopplung, bei der die aktive Kennlinie direkt angepasst und auch direkt für die Ansteuerung herangezogen wird, kann die Robustheit des Systems steigern. So haben beispielsweise kleinere Fluktuationen der Ist-Größe keine direkten Auswirkungen auf die Ansteuerung, sondern es können zunächst über einen bestimmten Zeitraum Daten gesammelt bzw. die Anpassungen der Kennlinie(n) über einen längeren Zeitraum durchgeführt und z.B. gemittelt werden.

In einer weiteren möglichen Ausführungsform ist vorgesehen, dass die Steuereinheit eingerichtet ist, bei Erkennung einer weiteren Abweichung zwischen erneut erfasster Ist-Größe und Soll-Größe die neue Kennlinie dynamisch anzupassen und/oder eine weitere neue Kennlinie zu erzeugen und im Speicher abzulegen, wobei die Steuergröße weiterhin anhand einer alten Kennlinie bestimmt wird. Es wird also parallel zur alten, weiterhin aktiven Kennlinie eine neue Kennlinie erzeugt, welche dann bei fortgesetzter Detektion von Abweichungen zwischen Ist- und Soll-Größe weiterhin angepasst und optimiert wird. Alternativ kann für jede weitere erkannte Abweichung stets eine neue inaktive Kennlinie erzeugt werden. Die aktive Kennlinie wird nicht beeinflusst und eine direkte Rückkopplung des adaptiven Systems auf die Ansteuerung dadurch vermieden.

In einer weiteren möglichen Ausführungsform ist vorgesehen, dass die Steuereinheit eingerichtet ist, die Bestimmung der Steuergröße anhand einer alten Kennlinie auf eine Bestimmung der Steuergröße anhand einer neu erzeugten Kennlinie umzuschalten bzw. umzustellen. Die Umstellung erfolgt vorzugsweise bei Überschreitung eines Grenzwerts für eine Abweichung zwischen Ist-Größe und Soll-Größe und/oder zwischen alter und neu erzeugter Kennlinie und/oder bei Ablauf einer definierten Zeitdauer und/oder bei Über- oder Unterschreitung eines Grenzwerts für eine weitere erfassbare Größe.

Die alte Kennlinie bleibt also zunächst aktiv und wird für die Bestimmung der Steuergröße herangezogen, während parallel dazu eine oder mehrere inaktive Kennlinien in Abhängigkeit der erkannten Abweichungen erzeugt und ggf. dynamisch angepasst und optimiert werden. Die Umschaltung der Bestimmung der Steuergröße auf die neuen, angepassten Kennlinien erfolgt zu einem festgelegten Zeitpunkt und vorzugsweise anhand der vorgenannten Kriterien.

In einer weiteren möglichen Ausführungsform ist vorgesehen, dass die Steuereinheit eingerichtet ist, die Umstellung von alter auf neue Kennlinie automatisch und insbesondere außerhalb des Betriebs des Arbeitsgeräts durchzuführen. Die Umschaltung erfolgt also insbesondere während der Standzeit des Arbeitsgeräts. Dadurch ändert sich nicht plötzlich das Ansteuerverhalten des Arbeitsgeräts während des Betriebs.

Erfindungsgemäß ist vorgesehen, dass die Steuereinheit eingerichtet ist, in einem Kalibriermodus durch gezielte Ansteuerung des Antriebs und sequenzielle Erfassung mehrerer Werte der Ist-Größe während der Bewegung der Komponente mindestens eine neue Kennlinie zu erzeugen und im Speicher abzulegen. Es werden also im Kalibriermodus gezielt Testfahrten durchgeführt und Messdaten der Ist-Größe erfasst, um eine Anpassung der Kennlinie(n) durchzuführen. Dies kann beispielsweise gezielt nach einem Austausch oder einer Wartung bzw. Reparatur einer Komponente erfolgen. Der Kalibriermodus kann manuell, d.h. durch den Bediener, und/oder automatisch durch die Steurreinheit anhand festgelegter Kriterien aktivierbar sein.

In einer weiteren möglichen Ausführungsform ist vorgesehen, dass die Steuereinheit eingerichtet ist, bei Erkennung einer Abweichung zwischen Ist-Größe und Soll-Größe und/oder bei einer Analyse einer erkannten Abweichung zusätzlich Betriebsinformationen zu berücksichtigen, die in einem Speicher hinterlegt sind und das Arbeitsgerät betreffen. Die Betriebsinformationen können einen Austausch, eine Reparatur, eine Verwendungsdauer bzw. eine Alterung oder einen Verschleiß mindestens einer Komponente (dazu zählen insbesondere auch Antriebe, Stellglieder etc.) des Arbeitsgeräts betreffen. So kann beispielsweise eine alterungsbedingt erhöhte Leckage von Komponenten (z.B. Ventilen, Hydraulikpumpen oder Hydraulikmotoren) eines hydraulischen Systems berücksichtigt werden.

In einer weiteren möglichen Ausführungsform ist vorgesehen, dass der Antrieb ein hydraulischer Antrieb ist, welcher insbesondere über ein hydraulisches Stellglied vorsteuerbar ist. Die Steuergröße betrifft vorzugsweise einen Stromwert für die Ansteuerung des Antriebs oder Stellglieds. Die Soll-Größe bzw. Ist-Größe kann ferner eine Geschwindigkeit der Bewegung der angetriebenen Komponente betreffen, d.h. es werden bei dem Abgleich durch die Steuereinheit Ist- und Soll-Geschwindigkeit verglichen. Bei dem Stellglied kann es sich um ein Hydraulikventil handeln.

Selbstverständlich gelten die vorangegangenen Ausführungen auch für Ausführungsformen, bei der mehrere Antriebe ansteuerbar sind und entsprechend für jeden der Antriebe mindestens eine Kennlinie vorgesehen ist. Hierbei werden Ist-Werte für jede der angesteuerten Komponenten erfasst und jeweils ein Abgleich mit entsprechenden Soll-Größen durchgeführt.

Die Soll-Größe kann durch eine Bedienereingabe des Bedieners des Arbeitsgeräts vorgebbar sein. Ebenfalls ist vorstellbar, dass die Soll-Größe in einem Speicher bzw. Tabelle abgelegt und/oder selbst ermittelt bzw. berechnet wird, beispielsweise auf Grundlage einer Bedienereingabe. Beispielhaft sei hier der Fall genannt, dass der Bediener eines Krans durch eine Bedienereingabe ein Anheben einer Last auslöst, wobei die Hubgeschwindigkeit anhand von hinterlegten Tabellen und weiteren Betriebsparametern wie z.B. der Traglast, der Krankonfiguration oder dergleichen durch die Steuereinheit ermittelt wird.

Der Wert der Soll-Größe muss nicht über den gesamten Bewegungsvorgang der angesteuerten Komponente konstant bleiben, sondern kann sich ggf. verändern (z.B. bei einem automatisch verlangsamten Absetzen einer Last), sodass eine kontinuierliche Erfassung der Ist-Größe während der Bewegung erforderlich sein kann. Für den Vergleich mit der Soll-Größe kann aber auch ein den gesamten Bewegungsvorgang repräsentierender Wert, beispielsweise ein Maximal-, Minimal-, oder Durchschnittswert herangezogen werden. Beispielsweise kann es sich bei Soll- und Ist-Größe jeweils um eine Maximalgeschwindigkeit handeln.

Die vorliegende Erfindung betrifft ferner ein Verfahren zur Ansteuerung eines Antriebs eines erfindungsgemäßen Arbeitsgeräts mit den folgenden Schritten:
- Bestimmen der Steuergröße in Abhängigkeit der Soll-Größe anhand einer im Speicher gespeicherten Kennlinie mittels der Steuereinheit, wobei die Soll-Größe durch eine Bedienereingabe vorgegeben sein kann,
- Ansteuern des Antriebs mittels der Steuereinheit auf Grundlage der Steuergröße, um die angesteuerte Komponente zu bewegen,
- Erfassen der Ist-Größe mittels der Messeinrichtung,
- Vergleichen von Ist-Größe und Soll-Größe mittels der Steuereinheit,
- Erkennen einer Abweichung zwischen Ist-Größe und Soll-Größe mittels der Steuereinheit, wobei hierfür vorzugsweise spezielle Filter und/oder Algorithmen zum Selektieren geeigneter Messdaten verwendet werden, und
- Anpassen der gespeicherten Kennlinie oder Erzeugen und Abspeichern einer neuen Kennlinie auf Grundlage der erkannten Abweichung mittels der Steuereinheit.

Dabei ergeben sich offensichtlich dieselben Vorteile und Eigenschaften wie für das erfindungsgemäße Arbeitsgerät, weshalb an dieser Stelle auf eine wiederholende Beschreibung verzichtet wird. Die in Bezug auf das Arbeitsgerät beschriebenen möglichen Ausführungsformen gelten analog für das erfindungsgemäße Verfahren.

In einer möglichen Ausführungsform des Verfahrens ist vorgesehen, dass die Ist-Größe während der Betriebsdauer des Arbeitsgeräts mehrfach hintereinander erfasst und mit der Soll-Größe verglichen wird, wobei während des Betriebs dynamisch eine alte gespeicherte Kennlinie angepasst und/oder eine neue Kennlinie erzeugt und diese angepasst wird. Vorzugsweise wird die Steuergröße solange weiterhin anhand einer alten gespeicherten Kennlinie bestimmt, bis ein Grenzwert für eine Abweichung zwischen Ist- und Soll-Größe und/oder zwischen einer alten gespeicherten und einer neu erzeugten Kennlinie überschritten wird, bis eine definierte Zeitdauer abläuft und/oder bis ein Grenzwert für eine weitere erfassbare Größe über- oder unterschritten wird, woraufhin die Steuergröße ab diesem Zeitpunkt anhand einer neu erzeugten bzw. nun aktivierten Kennlinie bestimmt wird.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische Darstellung des erfindungsgemäßen Verfahrens gemäß einem ersten Ausführungsbeispiel; und
- Figur 2:: eine schematische Darstellung des erfindungsgemäßen Verfahrens gemäß einem zweiten Ausführungsbeispiel.

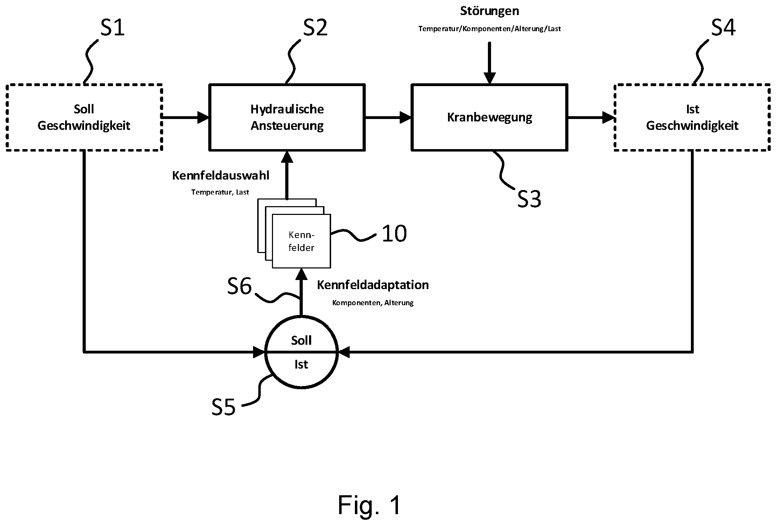

Die Figur 1 zeigt schematisch ein erstes Ausführungsbeispiel der adaptiven Kennlinien- bzw. Kennfeldanpassung des erfindungsgemäßen Verfahrens. Im Folgenden wird das erfindungsgemäße adaptive System am Beispiel eines Krans beschrieben. Allerdings ist die Erfindung nicht auf Krane beschränkt, sondern kann bei beliebigen Arbeitsgeräten zum Einsatz kommen.

Bei dem in der Figur 1 gezeigten Ausführungsbeispiel wird ein Krangewerk bzw. eine Hubwinde zum Heben einer Last über einen hydraulischen Antrieb angesteuert. Der Antrieb ist über ein hydraulisches Ventil vorgesteuert, wobei das Ventil über eine Steuereinheit des Krans bzw. eine Kransteuerung elektronisch angesteuert wird. In einem Speicher des Arbeitsgeräts sind Kennfelder 10 für die Umsetzung einer Soll-Geschwindigkeit im Hubwerk hinterlegt, welche für die Ermittlung eines entsprechenden Stromwerts für die Ansteuerung des Antriebs herangezogen werden. Die Kennfelder 10 berücksichtigen dabei die teilweise nicht-linearen Kennwerte des hydraulischen Systems (z.B. Ventil-Kennlinien).

Die Kennfelder 10 sind anhand von messbaren Größen wie Temperatur, Traglast bzw. Moment etc. gruppiert. Abhängig von Temperatur und zu hebender Last wird also ein bestimmtes Kennfeld 10 für die Ermittlung des Stromwerts herangezogen. Diese Ermittlung kann beispielsweise mittels Interpolation zwischen im Kennfeld 10 hinterlegten diskreten Kennwerten erfolgen. Alternativ zu Kennfeldern können auch einzelne Kennlinien gespeichert und entsprechend gruppiert sein.

In bekannten Systemen sind die Abhängigkeiten der Kennfelder 10 durch Alterung bzw. Abnutzung (z.B. mit der Zeit erhöhte Leckage) oder Komponententausch nicht berücksichtigt bzw. erfordern eine manuelle Einstellung der Kennfelder 10 im Werk.

Etwaige Ungenauigkeiten werden typischerweise zu Ungunsten anderer Betriebspunkte (z.B. langsamere Bewegung, Zwischenlasten etc.) manuell eingestellt. Um die Ansteuerung zu verbessern und die Notwendigkeit manueller Einstellungen zu verringern oder abzuschaffen, sieht die vorliegende Erfindung eine adaptive Kennfeldanpassung vor.

Aus den gespeicherten Kennfeldern 10 wird in Abhängigkeit der zu hebenden Traglast und der herrschenden Temperatur (beide Parameter werden mittels hierfür vorgesehener Sensoren erfasst) ein geeignetes Kennfeld 10 ausgewählt. Aus dem ausgewählten Kennfeld 10 wird anhand einer beispielsweise durch eine Bedienereingabe vorgegebenen Soll-Geschwindigkeit (Schritt S1) ein Stromwert für die Ansteuerung des Hubwerks bzw. des das Hubwerk vorsteuernden Ventils ermittelt, woraufhin die Ansteuerung durch die Kransteuerung erfolgt (Schritt S2). Die Ansteuerung führt zu einer Bewegung des Hubwerks (Schritt S3), d.h. zu einem Anheben der Last.

Mittels einer Messeinrichtung wird die Ist-Geschwindigkeit des Hubwerks (beispielsweise die Drehgeschwindigkeit der Hubwinde oder die Geschwindigkeit des Zugmittels bzw. Zugseils) gemessen und der Kransteuerung zur Verfügung gestellt (Schritt S4). Die Kransteuerung vergleicht die gemessene Ist-Geschwindigkeit mit der vorgegebenen Soll-Geschwindigkeit (Schritt S5). Weichen diese Werte voneinander ab und überschreiten einen in der Kransteuerung bzw. im Speicher hinterlegten Grenzwert (dieser kann global definiert oder ebenfalls von weiteren Parametern wie z.B. der Bewegung bzw. Hubgeschwindigkeit, Temperatur, Last, einem Betriebsparameter des Krans oder dergleichen abhängen), so erkennt die Kransteuerung eine Abweichung und führt eine Kennfeldadaption durch (Schritt S6).

Durch die Kennfeldadaption können die Stromwerte für die Ansteuerung des Hubwerks den Abweichungen angepasst und somit diese Abweichungen kompensiert werden, die z.B. aus Komponentenalterung, einer unterschiedliche Bauteilkennlinie aufgrund eines Komponententauschs oder Komponententoleranzen resultieren. Mit anderen Worten werden anhand der angepassten Kennfelder 10 zur Erreichung derselben Soll-Geschwindigkeit unterschiedliche Stromwerte ermittelt.

Die Ist-Geschwindigkeit wird im normalen Kranbetrieb idealerweise fortlaufend erfasst (Schritt S4) und mit den Soll-Vorgaben verglichen (Schritt S5), sodass Abweichungen jederzeit und zeitnah erkannt werden können. Zudem stehen damit größere Datenmengen für eine robustere Kennfeldadaption (Schritt S6) zur Verfügung.

Ferner sind vorzugsweise spezielle Filter und/oder Algorithmen vorgesehen, anhand derer aus den gemessenen Daten die brauchbaren bzw. für den Abgleich verwertbaren Messwerte bzw. Messzyklen der Ist-Geschwindigkeit selektiert werden. Bei den Soll- und Ist-Geschwindigkeiten kann es sich um Maximalwerte handeln. Darüber hinaus können zur Analyse der Abweichungen zwischen Ist- und Soll-Geschwindigkeiten eine Fuzzy-Logik, RMS und/oder andere geeignete Methoden verwendet werden. Die Kennfeldadaption (Schritt S6) kann mit Hilfe eines selbstlernenden Algorithmus bzw. unter Verwendung von "machine-learning"-Methoden erfolgen.

Durch die erfindungsgemäße Kennfeldadaption wird die Qualität der (Vor-)Steuerung deutlich erhöht und systematische Störungen und Abweichungen durch die überlagerte Regelung (Adaption der Kennfelder 10) kompensiert.

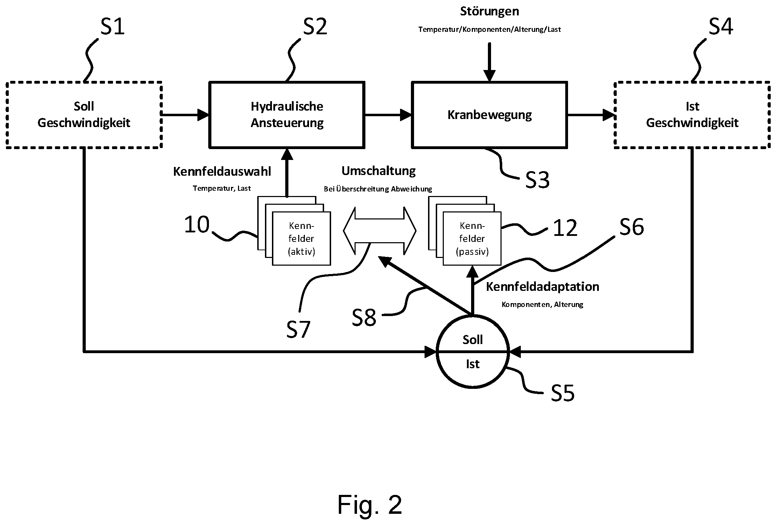

Bei dem Ausführungsbeispiel der Figur 1 erfolgt eine direkte Rückkopplung, d.h. die zur Bestimmung des Stromwerts (also der Steuergröße bzw. Regelgröße) verwendeten Kennfelder 10 werden unmittelbar durch die Kransteuerung angepasst. Ein alternatives Ausführungsbeispiel ist in der Figur 2 gezeigt. Hierbei werden nicht die aktuell zur Ermittlung der Stromwerte herangezogenen Kennfelder 10 (auch als alte, aktive oder stationäre Kennfelder bzw. Basiskennfelder 10 bezeichnet) angepasst, sondern bei einer Erkennung entsprechender Abweichungen zwischen Ist- und Soll-Geschwindigkeiten im Schritt S5 werden zunächst neue Kennfelder 12 (auch als neue, inaktive oder passive Kennfelder 12 bezeichnet) generiert und parallel zu den aktiven Kennfeldern 10 im Speicher (oder einem eigenen Speicher, auf den die Kransteuerung Zugriff hat) abgelegt (Schritt S6).

Die im weiteren Kranbetrieb fortgesetzte Kennfeldadaption wird nur auf die inaktiven Kennfelder 12 angewandt, sodass die aktiven Kennfelder 10 unverändert bleiben. Dadurch wird eine direkte Rückkopplung vermieden, was das System robuster macht. Eine Umstellung bei der Bestimmung der Stromwerte von den alten Kennfeldern 10 auf die neuen optimierten Kennfelder 12 (Schritt S7) erfolgt zu einen festgelegten Zeitpunkt, beispielsweise bei Erkennung einer Abweichung zwischen alten und neuen Kennfeldern 10, 12 oder wenn eine Abweichung zwischen Ist- und Soll-Geschwindigkeit über einem definierten Grenzwert bzw. Schwellenwert liegt (Schritt S8). Die Umstellung erfolgt insbesondere während einer Stilstandzeit des Krans, sodass der Bediener nicht mit einer sich plötzlich verändernden Steuerdynamik des Krans konfrontiert wird.

Ab dem Zeitpunkt der Umstellung (Schritt S7) werden die neu angepassten bzw. optimierten Kennfelder 12 zur Bestimmung der Stromwerte bzw. für die Ansteuerung (Schritt S2) herangezogen. Die alten Kennfelder 10 werden entweder gelöscht oder bleiben gespeichert, beispielsweise als Referenzwerte, die eine spätere Auswertung hinsichtlich der Alterung / Abnutzung der Komponenten ermöglichen. Nun können wieder parallel neue Kennfelder 12 erzeugt und anhand der fortgesetzten Messung der Ist-Geschwindigkeit (Schritt S4) angepasst werden, bis wiederum eine erneute Umstellung (Schritt S7) erfolgt.

In den hier beschriebenen Ausführungsbeispielen werden sämtliche Schritte lokal im Arbeitsgerät durchgeführt. Es aber ebenfalls denkbar, dass ein oder mehrere Schritte auf eine externe Rechnereinheit oder Cloud ausgelagert werden, beispielsweise der Vergleich zwischen Ist- und Soll-Größe, die Auswahl der für diesen Vergleich herangezogenen Messdaten, die Auswertung der Abweichungen, die Erzeugung und ggf. weitere Anpassung neuer Kennlinien und/oder die Entscheidung, wann eine Umstellung von den alten auf die neuen Kennlinien erfolgt.

### Bezugszeichenliste:

- 10: Gespeichertes Kennfeld
- 12: Neu erzeugtes Kennfeld
- S1: Vorgabe Soll- Geschwindigkeit
- S2: Ansteuerung
- S3: Bewegung
- S4: Erfassung Ist-Geschwindigkeit
- S5: Vergleich Ist- und Soll- Geschwindigkeit
- S6: Kennfeldadaption
- S7: Umschaltung zwischen altem und neuem Kennfeld
- S8: Auslösung der Umstellung

## Patentansprüche

1. Arbeitsgerät, insbesondere Kran oder Bagger, umfassend:
- einen Antrieb, mittels welchem eine Komponente bewegbar ist,
- eine Steuereinheit, mittels welcher der Antrieb ansteuerbar ist,
- eine Messeinrichtung, mittels welcher eine Ist-Größe betreffend eine Bewegung der angesteuerten Komponente erfassbar ist, und
- einen Speicher, in welchem mindestens eine Kennlinie für die Ansteuerung des Antriebs abgelegt ist,
wobei die Steuereinheit eingerichtet ist,
- in Abhängigkeit einer die Bewegung der Komponente betreffenden Soll-Größe anhand einer gespeicherten Kennlinie (10) eine Steuergröße für die Ansteuerung des Antriebs zu bestimmen,
- die erfasste Ist-Größe mit der Soll-Größe zu vergleichen und eine Abweichung zwischen diesen zu erkennen sowie
- auf Grundlage der Abweichung die Kennlinie (10) anzupassen oder eine neue Kennlinie (12) zu erzeugen und im Speicher abzulegen,
**dadurch gekennzeichnet,**
**dass** die Steuereinheit eingerichtet ist, in einem Kalibriermodus durch gezielte Ansteuerung des Antriebs zur Durchführung einer Testfahrt und sequenzielle Erfassung mehrerer Werte der Ist-Größe während der Bewegung der Komponente mindestens eine neue Kennlinie (12) zu erzeugen und im Speicher abzulegen, wobei der Kalibriermodus manuell und/oder automatisch aktivierbar ist.

2. Arbeitsgerät nach Anspruch 1, **dadurch gekennzeichnet, dass** die Steuereinheit eingerichtet ist, die Erfassung der Ist-Größe und den Vergleich mit der Soll-Größe mehrfach, insbesondere in regelmäßigen Zeitintervallen, während der Betriebsdauer des Arbeitsgeräts durchzuführen.

3. Arbeitsgerät nach Anspruch 1 oder 2, **dadurch gekennzeichnet, dass** im Speicher mehrere Kennlinien (10) abgelegt sind, wobei die Steuereinheit eingerichtet ist, die Steuergröße in Abhängigkeit der Soll-Größe und mindestens einer weiteren Größe anhand einer gespeicherten Kennlinie (10) zu bestimmen, wobei die weitere Größe vorzugsweise mittels einer weiteren Messeinrichtung erfassbar ist und insbesondere einen Betriebsparameter des Arbeitsgeräts, eine Temperatur und/oder eine Last betrifft.

4. Arbeitsgerät nach Anspruch 3, **dadurch gekennzeichnet, dass** die Steuereinheit eingerichtet ist, auf Grundlage der Abweichung zwischen Ist-Größe und Soll-Größe sowie unter Berücksichtigung der weiteren Größe mehrere gespeicherte Kennlinien (10) anzupassen oder mehrere neue Kennlinien (12) zu erzeugen und im Speicher abzulegen.

5. Arbeitsgerät nach einem der vorhergehenden Ansprüche, **dadurch gekennzeichnet, dass** die Steuereinheit eingerichtet ist, eine erkannte Abweichung zwischen Ist-Größe und Soll-Größe zu analysieren und automatisch eine Anpassung einer gespeicherten Kennlinie (10) oder eine Erzeugung und Speicherung einer neuen Kennlinie (12) durchzuführen.

6. Arbeitsgerät nach einem der vorhergehenden Ansprüche, **dadurch gekennzeichnet, dass** mittels der Messeinrichtung mehrere Messwerte der Ist-Größe zu unterschiedlichen Zeitpunkten während der Betriebsdauer des Arbeitsgeräts erfassbar sind, wobei die Steuereinheit eingerichtet ist, aus den erfassten Messwerten der Ist-Größe einen oder mehrere Messwerte für den Vergleich mit der Soll-Größe zu selektieren.

7. Arbeitsgerät nach einem der vorhergehenden Ansprüche, **dadurch gekennzeichnet, dass** die Steuereinheit eingerichtet ist, auf Grundlage einer erkannten Abweichung zwischen Ist-Größe und Soll-Größe eine neue Kennlinie (12) zu erzeugen und im Speicher abzulegen und die Steuergröße weiterhin anhand einer alten Kennlinie (10) zu bestimmen.

8. Arbeitsgerät nach Anspruch 7, **dadurch gekennzeichnet, dass** die Steuereinheit eingerichtet ist, bei Erkennung einer weiteren Abweichung zwischen erneut erfasster Ist-Größe und Soll-Größe die neue Kennlinie (12) anzupassen und/oder eine weitere neue Kennlinie (12) zu erzeugen und im Speicher abzulegen und die Steuergröße weiterhin anhand einer alten Kennlinie (10) zu bestimmen.

9. Arbeitsgerät nach Anspruch 7 oder 8, **dadurch gekennzeichnet, dass** die Steuereinheit eingerichtet ist, die Bestimmung der Steuergröße anhand einer alten Kennlinie (10) auf eine Bestimmung der Steuergröße anhand einer neu erzeugten Kennlinie (12) umzustellen, wobei die Umstellung vorzugsweise dann erfolgt, wenn ein Grenzwert für eine Abweichung zwischen Ist-Größe und Soll-Größe und/oder zwischen alter und neu erzeugter Kennlinie (10, 12) überschritten wird, wenn eine definierte Zeitdauer abläuft und/oder wenn ein Grenzwert für eine weitere erfassbare Größe über- oder unterschritten wird.

10. Arbeitsgerät nach Anspruch 9, **dadurch gekennzeichnet, dass** die Steuereinheit eingerichtet ist, die Umstellung von alter auf neue Kennlinie (12) automatisch und insbesondere außerhalb des Betriebs des Arbeitsgeräts durchzuführen.

11. Arbeitsgerät nach einem der vorhergehenden Ansprüche, **dadurch gekennzeichnet, dass** die Steuereinheit eingerichtet ist, bei Erkennung einer Abweichung zwischen Ist-Größe und Soll-Größe und/oder bei einer Analyse einer erkannten Abweichung in einem Speicher hinterlegte Betriebsinformationen zu berücksichtigen, welche insbesondere einen Austausch, eine Reparatur, eine Verwendungsdauer oder einen Verschleiß mindestens einer Komponente des Arbeitsgeräts betreffen.

12. Arbeitsgerät nach einem der vorhergehenden Ansprüche, **dadurch gekennzeichnet, dass** der Antrieb ein hydraulischer Antrieb ist, welcher insbesondere über ein hydraulisches Stellglied vorsteuerbar ist, wobei vorzugsweise die Steuergröße einen Stromwert für die Ansteuerung des Antriebs oder Stellglieds und/oder die Soll-Größe eine Geschwindigkeit betrifft.

13. Verfahren zur Ansteuerung eines Antriebs eines Arbeitsgeräts nach einem der vorhergehenden Ansprüche mit den Schritten:
- Bestimmen der Steuergröße in Abhängigkeit der Soll-Größe anhand einer gespeicherten Kennlinie (10) mittels der Steuereinheit,
- Ansteuern des Antriebs mittels der Steuereinheit auf Grundlage der Steuergröße, um die Komponente zu bewegen,
- Erfassen der Ist-Größe mittels der Messeinrichtung,
- Vergleichen von Ist-Größe und Soll-Größe mittels der Steuereinheit,
- Erkennen einer Abweichung zwischen Ist-Größe und Soll-Größe mittels der Steuereinheit und
- Anpassen der gespeicherten Kennlinie (10) oder Erzeugen und Abspeichern einer neuen Kennlinie (12) auf Grundlage der erkannten Abweichung mittels der Steuereinheit,
- wobei die Steuereinheit in einem manuell und/oder automatisch aktivierbaren Kalibriermodus den Antrieb zur Durchführung einer Testfahrt gezielt ansteuert und mehrere Werte der Ist-Größe während der Bewegung der Komponente erfasst, um mindestens eine Kennlinie (12) zu erzeugen und im Speicher abzulegen.

14. Verfahren nach Anspruch 13, **dadurch gekennzeichnet, dass** die Ist-Größe während der Betriebsdauer des Arbeitsgeräts mehrfach hintereinander erfasst und mit der Soll-Größe verglichen wird, wobei während des Betriebs eine alte gespeicherte Kennlinie (10) angepasst und/oder eine neue Kennlinie (12) erzeugt und diese dynamisch angepasst wird, wobei vorzugsweise die Steuergröße solange weiterhin anhand einer alten gespeicherten Kennlinie (10) bestimmt wird, bis ein Grenzwert für eine Abweichung zwischen Ist-Größe und Soll-Größe und/oder zwischen einer alten gespeicherten und einer neu erzeugten Kennlinie (10, 12) überschritten wird, bis eine definierte Zeitdauer abläuft und/oder bis ein Grenzwert für eine weitere erfassbare Größe über- oder unterschritten wird, woraufhin die Steuergröße ab diesem Zeitpunkt anhand einer neu erzeugten Kennlinie (12) bestimmt wird.

## Claims

1. An implement, in particular crane or excavator, comprising:
- a drive by means of which a component can be moved,
- a control unit by means of which the drive can be actuated,
- a measuring device by means of which an actual variable relating to a movement of the actuated component can be detected , and
- a memory in which at least one characteristic curve for the actuation of the drive is stored,
wherein the control unit is adapted
- to determine a control variable for the actuation of the drive in dependence on a setpoint variable relating to the movement of the component with reference to a stored characteristic curve (10),
- to compare the detected actual variable with the setpoint variable and to detect a deviation between the same and
- to adjust the characteristic curve (10) or to generate a new characteristic curve (12) on the basis of the deviation and to store the same in the memory,
**characterized in that**
in a calibration mode the control unit is adapted to generate at least one new characteristic curve (12) and store it in the memory by the targeted actuation of the drive and the sequential detection of a plurality of values of the actual variable during the movement of the component, wherein the calibration mode can be activated manually and/or automatically.

2. The implement according to claim 1, **characterized in that** the control unit is adapted to carry out the detection of the actual variable and the comparison with the setpoint variable several times, in particular at regular time intervals, during the operating period of the implement.

3. The implement according to claim 1 or 2, **characterized in that** in the memory a plurality of characteristic curves (10) are stored, wherein the control unit is adapted to determine the control variable in dependence on the setpoint variable and at least one further variable with reference to a stored characteristic curve (10), wherein the further variable preferably can be detected by means of a further measuring device and in particular relates to an operating parameter of the implement, a temperature and/or a load.

4. The implement according to claim 3, **characterized in that** the control unit is adapted to adjust a plurality of stored characteristic curves (10) on the basis of the deviation between actual variable and setpoint variable and by taking account of the further variable, or to generate a plurality of new characteristic curves (12) and store the same in the memory.

5. The implement according to any one of the preceding claims, characterized that the control unit is adapted to analyze a detected deviation between actual variable and setpoint variable and automatically carry out an adjustment of a stored characteristic curve (10) or a generation and storage of a new characteristic curve (12).

6. The implement according to any one of the preceding claims, **characterized in that** by means of the measuring device a plurality of measurement values of the actual variable can be detected at different times during the operating period of the implement, wherein the control unit is adapted to select one or more measurement values from the detected measurement values of the actual variable for the comparison with the setpoint variable.

7. The implement according to any one of the preceding, claims, **characterized in that** the control unit is adapted to generate a new characteristic curve (12) and store it in the memory on the basis of a detected deviation between actual variable and setpoint variable and to furthermore determine the control variable with reference to an old characteristic curve (10).

8. The implement according to claim, 7, **characterized in that** the control unit is adapted to adjust the new characteristic curve (12) upon detection of a further deviation between newly detected actual variable and setpoint variable and/or to generate another new characteristic curve (12) and store it in the memory and to furthermore determine the control variable with reference to an old characteristic curve (10).

9. The implement according to claim 7 or 8, **characterized in that** the control unit is adapted to change the determination of the control variable with reference to an old characteristic curve (10) to a determination of the control variable with reference to a newly generated characteristic curve (12), wherein the change preferably is effected when a limit value for a deviation between actual variable and setpoint variable and/or between old and newly generated characteristic curve (10, 12) is exceeded, when a defined period of time expires and/or when a limit value for another detectable variable is exceeded or fallen short of.

10. The implement according to claim 9, **characterized in that** the control unit is adapted to carry out the change from an old to a new characteristic curve (12) automatically and in particular outside the operation of the implement.

11. The implement according to any one of the preceding claims, **characterized in that** the control unit is adapted to take account of operating information stored in a memory when a deviation between actual variable and setpoint variable is detected and/or when a detected deviation is analyzed, which operating information in particular relates to an exchange, a repair, a period of use or a wear of at least one component of the implement.

12. The implement according to any one of the preceding claims, **characterized in that** the drive is a hydraulic drive which in particular can be pilot-controlled via a hydraulic actuator, wherein preferably the control variable relates to a current value for the actuation of the drive or actuator and/or the setpoint variable relates to a speed.

13. A method of actuating a drive of an implement according to any one of the preceding claims, comprising the following steps:
- determining the control variable in dependence on the setpoint variable with reference to a stored characteristic curve (10) by means of the control unit,
- actuating the drive by means of the control unit on the basis of the control variable, in order to move the component,
- detecting the actual variable by means of the measuring device,
- comparing actual variable and setpoint variable by means of the control unit,
- detecting a deviation between actual variable and setpoint variable by means of the control unit, and
- adjusting the stored characteristic curve (10) or generating and storing a new characteristic curve (12) on the basis of the detected deviation by means of the control unit,
wherein in a manually and/or automatically activated calibration mode the control unit actuates the drive for carrying out a test run in a targeted manner and detects multiple values of the actual variable during the movement of the component in order to generate at least one new characteristic curve (12) and store it in the memory.

14. The method according to claim 13, **characterized in that** the actual variable is detected several times in a row during the operating period of the implement and is compared with the setpoint variable, wherein during operation an old stored characteristic curve (10) is adjusted and/or a new characteristic curve (12) is generated and the same is adjusted dynamically, wherein preferably the control variable furthermore is determined with reference to an old stored characteristic curve (10) until a limit value for a deviation between actual variable and setpoint variable and/or between an old stored characteristic curve and a newly generated characteristic curve (10, 12) is exceeded, until a defined time period expires and/or until a limit value for another detectable variable is exceeded or fallen short of, whereupon the control variable is determined from this time with reference to a newly generated characteristic curve (12).

## Revendications

1. Outil de travail, notamment grue ou excavateur, comprenant :
- un entraînement, au moyen duquel un composant peut être déplacé,
- une unité de commande, au moyen de laquelle l'entraînement peut être commandé,
- un dispositif de mesure, au moyen duquel une grandeur réelle concernant un déplacement du composant commandé peut être détectée, et
- une mémoire, dans laquelle est enregistrée au moins une courbe caractéristique pour la commande de l'entraînement,
l'unité de commande étant conçue
- pour déterminer une grandeur de commande pour la commande de l'entraînement en fonction d'une grandeur de consigne concernant le déplacement du composant à l'aide d'une courbe caractéristique (10) mémorisée,
- pour comparer la grandeur réelle détectée à la grandeur de consigne et pour identifier un écart entre elles ainsi que
- pour adapter la courbe caractéristique (10) sur la base de l'écart ou pour générer une nouvelle courbe caractéristique (12) et l'enregistrer dans la mémoire,
**caractérisé en ce que**
l'unité de commande est conçue pour générer au moins une nouvelle courbe caractéristique (12) dans un mode de calibrage par commande ciblée de l'entraînement pour l'exécution d'une course d'essai et détection séquentielle de plusieurs valeurs de la grandeur réelle pendant le déplacement du composant et pour l'enregistrer dans la mémoire, le mode de calibrage pouvant être activé manuellement et/ou automatiquement.

2. Outil de travail selon la revendication 1, **caractérisé en ce que** l'unité de commande est conçue pour effectuer la détection de la grandeur réelle et la comparaison à la grandeur de consigne à plusieurs reprises, notamment à intervalles de temps réguliers, pendant la durée de fonctionnement de l'outil de travail.

3. Outil de travail selon la revendication 1 ou 2, **caractérisé en ce que** plusieurs courbes caractéristiques (10) sont enregistrées dans la mémoire, l'unité de commande étant conçue pour déterminer la grandeur de commande en fonction de la grandeur de consigne et d'au moins une autre grandeur à l'aide d'une courbe caractéristique (10) mémorisée, l'autre grandeur pouvant être détectée de préférence au moyen d'un autre dispositif de mesure et concernant notamment un paramètre de fonctionnement de l'outil de travail, une température et/ou une charge.

4. Outil de travail selon la revendication 3, **caractérisé en ce que** l'unité de commande est conçue pour adapter plusieurs courbes caractéristiques (10) mémorisées ou pour générer plusieurs nouvelles courbes caractéristiques (12) et les enregistrer dans la mémoire sur la base de l'écart entre la grandeur réelle et la grandeur de consigne ainsi qu'en tenant compte de l'autre grandeur.

5. Outil de travail selon l'une quelconque des revendications précédentes, **caractérisé en ce que** l'unité de commande est conçue pour analyser un écart identifié entre la grandeur réelle et la grandeur de consigne et pour effectuer automatiquement une adaptation d'une courbe caractéristique (10) mémorisée ou une génération et une mémorisation d'une nouvelle courbe caractéristique (12).

6. Outil de travail selon l'une quelconque des revendications précédentes, **caractérisé en ce que** le dispositif de mesure permet de détecter plusieurs valeurs de mesure de la grandeur réelle à différents moments pendant la durée de fonctionnement de l'outil de travail, l'unité de commande étant conçue pour sélectionner, parmi les valeurs de mesure détectées de la grandeur réelle, une ou plusieurs valeurs de mesure pour la comparaison à la grandeur de consigne.

7. Outil de travail selon l'une quelconque des revendications précédentes, **caractérisé en ce que** l'unité de commande est conçue pour générer une nouvelle courbe caractéristique (12) sur la base d'un écart identifié entre la grandeur réelle et la grandeur de consigne et pour l'enregistrer dans la mémoire et pour continuer à déterminer la grandeur de commande à l'aide d'une ancienne courbe caractéristique (10).

8. Outil de travail selon la revendication 7, **caractérisé en ce que** l'unité de commande est conçue pour adapter la nouvelle courbe caractéristique (12) et/ou pour générer une autre nouvelle courbe caractéristique (12) et l'enregistrer dans la mémoire en cas d'identification d'un autre écart entre la grandeur réelle détectée à nouveau et la grandeur de consigne, et pour continuer à déterminer la grandeur de commande à l'aide d'une ancienne courbe caractéristique (10).

9. Outil de travail selon la revendication 7 ou 8, **caractérisé en ce que** l'unité de commande est conçue pour passer de la détermination de la grandeur de commande à l'aide d'une ancienne courbe caractéristique (10) à une détermination de la grandeur de commande à l'aide d'une courbe caractéristique nouvellement générée (12), le passage s'effectuant de préférence lorsqu'une valeur limite pour un écart entre la grandeur réelle et la grandeur de consigne et/ou entre l'ancienne courbe caractéristique et la courbe caractéristique nouvellement générée (10, 12) est dépassée, lorsqu'une durée définie s'écoule et/ou lorsqu'une valeur limite pour une autre grandeur détectable est dépassée vers le haut ou vers le bas.

10. Outil de travail selon la revendication 9, **caractérisé en ce que** l'unité de commande est conçue pour effectuer le passage de l'ancienne à la nouvelle courbe caractéristique (12) automatiquement et notamment en dehors du fonctionnement de l'outil de travail.

11. Outil de travail selon l'une quelconque des revendications précédentes, **caractérisé en ce que** l'unité de commande est conçue pour tenir compte, lors de l'identification d'un écart entre la grandeur réelle et la grandeur de consigne et/ou lors d'une analyse d'un écart identifié, d'informations de fonctionnement enregistrées dans une mémoire, qui concernent notamment un remplacement, une réparation, une durée d'utilisation ou une usure d'au moins un composant de l'outil de travail.

12. Outil de travail selon l'une quelconque des revendications précédentes, **caractérisé en ce que** l'entraînement est un entraînement hydraulique qui peut être piloté notamment par l'intermédiaire d'un actionneur hydraulique, la grandeur de commande concernant de préférence une valeur de courant pour la commande de l'entraînement ou de l'actionneur et/ou la grandeur de consigne concernant une vitesse.

13. Procédé de commande d'un entraînement d'un outil de travail selon l'une quelconque des revendications précédentes, avec les étapes suivantes :
- la détermination de la grandeur de commande en fonction de la grandeur de consigne à l'aide d'une courbe caractéristique (10) mémorisée au moyen de l'unité de commande,
- la commande de l'entraînement au moyen de l'unité de commande sur la base de la grandeur de commande afin de déplacer le composant,
- la détection de la grandeur réelle au moyen du dispositif de mesure,
- la comparaison de la grandeur réelle et de la grandeur de consigne au moyen de l'unité de commande,
- l'identification d'un écart entre la grandeur réelle et la grandeur de consigne au moyen de l'unité de commande et
- l'adaptation de la courbe caractéristique (10) mémorisée ou la génération et la mémorisation d'une nouvelle courbe caractéristique (12) sur la base de l'écart identifié au moyen de l'unité de commande,
- l'unité de commande commandant de manière ciblée l'entraînement dans un mode de calibrage pouvant être activé manuellement et/ou automatiquement pour l'exécution d'une course d'essai et détectant plusieurs valeurs de la grandeur réelle pendant le déplacement du composant, afin de générer au moins une courbe caractéristique (12) et de l'enregistrer dans la mémoire.

14. Procédé selon la revendication 13, **caractérisé en ce que** la grandeur réelle est détectée plusieurs fois de suite pendant la durée de fonctionnement de l'outil de travail et comparée à la grandeur de consigne, une ancienne courbe caractéristique (10) mémorisée étant adaptée pendant le fonctionnement et/ou une nouvelle courbe caractéristique (12) étant générée et celle-ci étant adaptée de manière dynamique, la grandeur de commande continuant de préférence à être déterminée à l'aide d'une ancienne courbe caractéristique (10) mémorisée, jusqu'à ce qu'une valeur limite pour un écart entre la grandeur réelle et la grandeur de consigne et/ou entre une ancienne courbe caractéristique mémorisée et une courbe caractéristique nouvellement générée (10, 12) soit dépassée, jusqu'à ce qu'une durée définie s'écoule et/ou jusqu'à ce qu'une valeur limite pour une autre grandeur détectable soit dépassée vers le haut ou vers le bas, après quoi la grandeur de commande est déterminée à partir de ce moment à l'aide d'une courbe caractéristique nouvellement générée (12).
